# EUROPÄISCHE PATENTSCHRIFT

(11) **EP 1 313 584 B1**
(45) Veröffentlichungstag und Bekanntmachung des Hinweises auf die Patenterteilung: **17.11.2004**
(21) Anmeldenummer: 01969647.5
(22) Anmeldetag: 25.08.2001
(51) Int. Cl.: B23B 31/30

(54) **BETÄTIGUNGSVORRICHTUNG FÜR EINEN WERKZEUG- ODER WERKSTÜCKSPANNER IN EINER WERKZEUGMASCHINENSPINDEL**
ACTUATING DEVICE FOR A TOOL OR WORKPIECE TENSIONING JACK IN A MACHINE TOOL SPINDLE
DISPOSITIF D'ACTIONNEMENT POUR SYSTEME DE SERRAGE D'OUTIL OU DE PIECE DANS UNE BROCHE DE MACHINE-OUTIL

(30) Priorität: 01.09.2000 DE 10043006
(43) Veröffentlichungstag der Anmeldung: 28.05.2003
(73) Patentinhaber: OTT-JAKOB GmbH & Co. Spanntechnik KG, 87663 Lengenwang (DE)
(72) Erfinder: JAKOB, Ludwig, 63839 Kleinwallstadt (DE); GREIF, Josef, 87654 Friesenried (DE)
(74) Vertreter: Schwarz, Thomas, Dipl.-Ing.
(86) Internationale Anmeldenummer: PCT/EP2001/009820
(87) Internationale Veröffentlichungsnummer: WO 2002/018081

(56) Entgegenhaltungen:
- EP-A- 0 967 039
- US-A- 4 319 516

## Beschreibung

Die Erfindung betrifft eine Betätigungsvorrichtung für einen Werkzeug- oder Werkstückspanner in einer Werkzeugmaschinenspindel gemäß dem Oberbegriff des Anspruchs 1.

Die Arbeitsspindeln von Werkzeugmaschinen bzw. Bearbeitungszentren weisen in der Regel einen integrierten Werkzeugspanner zum automatischen Spannen und Lösen der Bearbeitungswerkzeuge auf. Bei den herkömmlichen Werkzeugspannern werden die Werkzeuge üblicherweise von einem Spanngreifer gehalten, der am vorderen Ende einer durch ein Tellerfederpaket vorgespannten Spannstange angeordnet ist und an einem entsprechenden Anzugsbolzen der Werkzeuge oder Werkzeughalter angreift. Zum Lösen der Werkzeuge wird die Spannstange durch eine i.a. hydraulisch betätigte Kolben-Zylinder-Einheit entgegen der Spannkraft des Tellerfederpakets verschoben, so daß die Spannzange geöffnet und das Werkzeug freigegeben wird. Vielfach ist auch eine innere Kühlmittelzufuhr vorgesehen, bei der das Kühlschmiermittel z. B. über die hohl ausgeführte Spannstange durch das Innere der Arbeitsspindel zum Werkzeug geleitet werden kann. Hierzu muß allerdings das Kühlschmiermittel durch eine geeignete Einrichtung von einem stationären Anschlußteil in die bei der Bearbeitung rotierenden Teile geführt werden. Dies erfolgt in der Regel durch sogenannte Drehdurchführungen, bei denen der Übergang zwischen den feststehenden und rotierenden Teilen über aufeinander gleitende Dichtringe erfolgt. Um eine besonders platzsparende und kompakte Bauweise zu erreichen, kann die Drehdurchführung innerhalb der Betätigungsvorrichtung für den Werkzeugspanner integriert sein. Da jedoch derartige Drehdurchführungen nicht vollständig abgedichtet sind und besonders an der Verbindungsstelle zwischen deren stationären und rotierenden Teilen eine Leckage des Kühlschmiermittels auftritt, ergibt sich vor allem bei der kompakten Bauweise die Problematik einer geeigneten Abfuhr des Leckfluids.

Aus der DE 195 43 612 C1 ist eine gattungsgemäße Betätigungsvorrichtung für einen Werkzeug- oder Werkstückspanner bekannt, die einen innerhalb eines Gehäuses angeordneten Druckkolben zur Betätigung einer durch ein Federpaket vorgespannten Zugstange enthält. In diese Betätigungsvorrichtung ist eine Drehdurchführung integriert, die eine mit der Zugstange fest verbundene erste Gleitscheibe und eine in einem gesonderten Dichtungsteil angeordnete zweite Gleitscheibe enthält. Der als Ringkolben ausgeführte Druckkolben ist in einem Zylinder untergebracht, der axial beweglich in einem feststehenden Maschinenteil geführt ist. Wird der Ringkolben innerhalb des Zylinders mit Druck beaufschlagt, so stützt sich der Kolben über innenseitige Eingriffselemente an der Spindel ab und übt eine entsprechende Gegenkraft auf den axial beweglichen Zylinder aus. Von diesem wird die Zugstange und auch die Drehdurchführung mitgenommen.

Aufgabe der Erfindung ist es, eine kompakte und platzsparende Betätigungsvorrichtung der eingangs genannten Art zu schaffen, die eine einfache Abführung von Leckfluid ermöglicht.

Diese Aufgabe wird erfindungsgemäß durch eine Betätigungsvorrichtung mit den Merkmalen des Anspruchs 1 gelöst.

Durch die voneinander beabstandete Anordnung der Druckstempel steht zwischen diesen ein Platz für die Durchführung von einer oder mehreren Leckagebohrungen oder kanälen zur Verfügung, in die ein Leckfluid rückdruckfrei abfließen und dort gesammelt bzw. über entsprechende Leitungen abgeführt werden kann. Besonders in der vertikalen Stellung einer Werkzeugmaschinenspindel fließt das Leckfluid von selbst nach unten ab und kann je nach Bedarf in entsprechenden Intervallen abgelassen oder ständig über geeignete Leitungen abtransportiert werden. Die erfindungsgemäße Betätigungsvorrichtung weist eine besonders kompakte Bauweise auf und ist daher auch besonders für Werkzeugmaschinen mit einem geringen Platzangebot geeignet.

Zweckmäßige Ausgestaltungen und vorteilhafte Weiterbildungen der Erfindung sind in den Unteransprüchen angegeben.

So enthält das Gehäuse in einer konstruktiv einfachen und kostengünstigen Ausführung ein inneres Gehäuseteil und ein mit diesem fest verbundenes äußeres Gehäuseteil, durch die ein ringförmiger Druckraum für den Druckkolben begrenzt wird. Der Leckagekanal wird zweckmäßigerweise durch Bohrungen gebildet, die parallel und senkrecht zur Mittelachse des Gehäuses verlaufen. Die Bohrungen können an ihren nach außen offenen Enden durch Verschlußstopfen bzw. Ablaßschrauben verschlossen oder an entsprechende Ablaufleitungen angeschlossen sein.

Innerhalb des Gehäuses der Betätigungsvorrichtung ist eine Drehdurchführung für die Zuführung eines Arbeits- und/oder Reinigungsfluids zu der im Betrieb rotierenden Werkzeugmaschinenspindel angeordnet. Die Drehdurchführung ist zweckmäßigerweise in einem gesonderten Gehäuse untergebracht und kann somit auf einfache Weise ein- bzw. ausgebaut werden.

In dem Gehäuse der Betätigungsvorrichtung kann außerdem ein Luftzufuhrkanal für die Reinigung von Spannflächen oder dergleichen vorgesehen sein.

Weitere Besonderheiten und Vorzüge ergeben sich aus der folgenden Beschreibung eines bevorzugten Ausführungsbeispiels anhand der Zeichnung. Es zeigen:
- **Figur 1**: einen Teil eines Werkzeugspanners mit einer erfindungsgemäßen Betätigungsvorrichtung im Schnitt;
- **Figur 2**: eine Seitenansicht der in Figur 1 dargestellten Betätigungsvorrichtung;
- **Figur 3**: eine Schnittansicht der Betätigungsvorrichtung in einer gegenüber Figur 1 versetzten Schnittebene und
- **Figur 4A, 4B**: eine Montage der Druckstempel an dem Druckkolben.

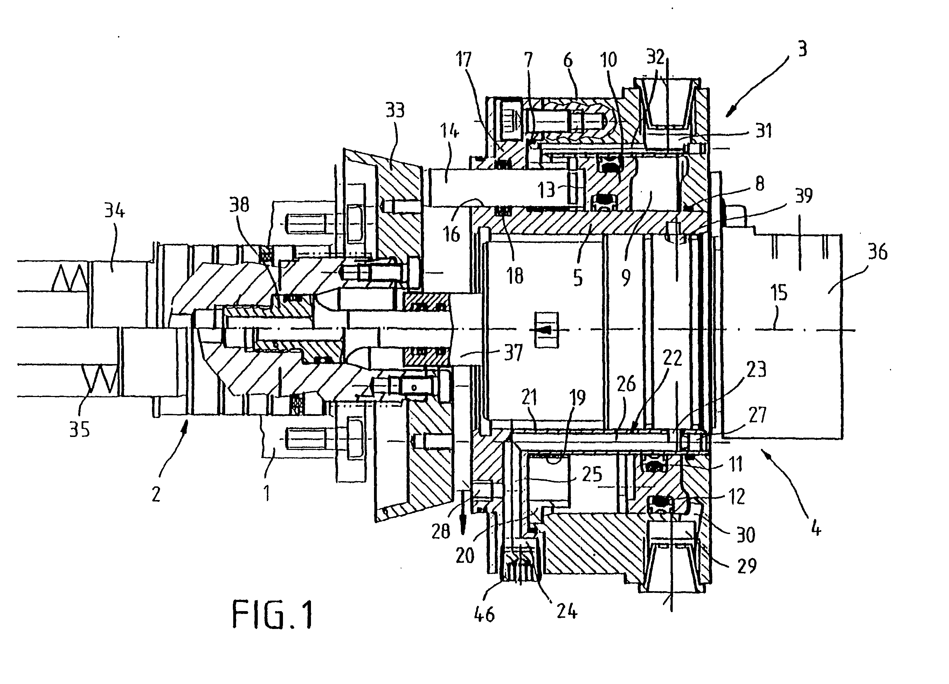

In Figur 1 ist ein Teil eines in einer Werkzeugmaschinenspindel 1 eingebauten Werkzeugspanners 2 und eine Betätigungsvorrichtung 3 mit einer sogenannten Drehdurchführung 4 für die Zuführung eines Arbeits- und/oder Reinigungsfluids zu der Werkzeugmaschinenspindel 1 gezeigt. Die dargestellten Teile des Werkzeugspanners 2 und der Betätigungsvorrichtung 3 sind in der oberen Hälfte der Figur 1 in einer Lösestellung und in der unteren Hälfte in einer Spannstellung gezeigt.

Wie aus Figur 1 hervorgeht, enthält die Betätigungsvorrichtung 3 ein hohlzylindrisches Gehäuse, das aus einem inneren Gehäuseteil 5 und einem mit diesem fest verschraubten äußeren Gehäuseteil 6 besteht. Von dem inneren und äußeren Gehäuseteil 5 und 6 wird ein über Dichtungen 7 bzw. 8 nach außen abgedichteter Druckraum 9 begrenzt, in dem ein ringförmiger Druckkolben 10 in Axialrichtung des Gehäuses verschiebbar angeordnet ist. Der Druckkolben 10 ist über innere und äußere Dichtelemente 11 und 12 gegenüber der Innenund Außenwand des ringförmigen Druckraums 9 abgedichtet. An der zum Werkzeugspanner 2 gerichteten Stirnseite 13 des Druckkolbens 10 sind die inneren Enden mehrerer in Umfangsrichtung gleichwinklig beabstandeter, zylindrischer Druckstempel 14 festgelegt, deren anderen Enden bei der in der oberen Hälfte der in Figur 1 dargestellten Lösestellung von dem Gehäuse nach außen vorstehen. Die Druckstempel 14 sind in mehreren um eine Mittelachse 15 des Gehäuses konzentrisch angeordneten Durchgangsbohrungen 16 in einem am Gehäuseteil 5 angeformten Radialflansch 17 angeordnet, der eine Seitenwand des Gehäuses bildet. Außerdem sind die Druckstempel 14 durch geeignete Dichtringe 18 in dem Radialflansch 17 gegenüber dem Gehäuse abgedichtet und in entsprechenden Führungsbohrungen 19 eines innerhalb des Druckraums 9 angeordneten Führungsrings 20 axial verschiebbar geführt.

Das mit einer zentralen Durchgangsöffnung 21 versehene Gehäuseteil 5 enthält mehrere Leckagekanäle 22, die von einer Ringnut 23 an der Innenwandung der Druchgangsöffnung 21 zu einer mittels einer Schraube 46 verschlossenen Ablaßöffnung 24 am Außenumfang des Radialflanschs 17 führen. Der Leckagekanal 22 wird durch einen im Radialflansch 17 quer zur Mittelachse 15 zwischen jeweils zwei Druckstempeln radial nach außen zu der Ablaßöffnung 24 verlaufenden Abschnitt 25 und einen dazu rechtwinkligen Abschnitt 26 gebildet, der parallel zur Mittelachse 15 zwischen der Innenwandung der Durchgangsöffnung 21 und dem Druckraum 9 verläuft. Zweckmäßigerweise wird der Leckagekanal 22 durch Bohrungen hergestellt, die von der hinteren Stirnseite und der Außenseite des Gehäuseteils 5 eingebracht und durch einen Verschlußstopfen 27 bzw. die Schraube 46 verschlossen werden. In den Abschnitt 25 mündet eine weitere Ablaufbohrung 28 an der Stirnseite des Radialflanschs 17 ein, die ebenfalls durch eine Verschlußschraube verschlossen werden kann.

An der Umfangswand des äußeren Gehäuseteils 6 ist eine erste radiale Zufuhröffnung 29 vorgesehen, die über eine Bohrung 30 zu einem hinteren Ende des ringförmigen Druckraums 9 führt. Über diese Zufuhröffnung 29 ist der ringförmige Druckkolben 10 zum Ausfahren der Druckstempel 14 mit Hydraulikfluid als Druckmittel beaufschlagbar. Von einer zweiten radialen Zufuhröffnung 31 am Gehäuseteil 6 führt eine parallel zur Mittelachse 15 verlaufende Zufuhrbohrung 32 zu dem vorderen Ende des Druckraums 9. Über die Zufuhröffnung 31 und die Zufuhrbohrung 32 kann der Druckkolben 10 zum Einfahren der Druckstempel 14 mit Hydraulikfluid beaufschlagt werden.

Über die durch den Druckkolben 10 betätigten Druckstempel 14 wird eine Druckscheibe 33 verschoben, die am hinteren Ende einer mit einer Durchgangsbohrung versehenen Spannstange 34 befestigt ist. Die Spannstange 34 ist innerhalb der Arbeitsspindel 1 axial verschiebbar angeordnet und wird durch ein schematisch angedeutetes Tellerfederpaket 35 in die in der unteren Hälfte der Figur 1 dargestellte Spannstellung vorgespannt. In dieser Stellung wird ein in der Werkzeugspindel eingesetztes Werkzeug z. B. von einem nicht gezeigten Spanngreifer in einen Konus eingezogen. Zum Lösen des Werkzeugs wird der Druckkolben 10 über die erste radiale Zufuhröffnung 29 und die Bohrung 30 mit einem Druckfluid beaufschlagt, wobei er zusammen mit den Druckstempeln 14 aus der in der unteren Zeichnungshälfte der Figur 1 dargestellten Spannstellung in die in der oberen Zeichnungshälfte dargestellte Lösestellung bewegt wird. Dabei wird die Spannstange 34 über den Druckring 33 gemäß Figur 1 nach links verschoben, wobei das Tellerfederpaket 35 zusammengedrückt wird. Dadurch gibt auch der an dem vorderen Ende der Spannstange angeordnete Spanngreifer das Werkzeug frei.

Zum Spannen des Werkzeugs wird der Druckkolben 10 über die zweite radiale Zufuhröffnung 31 und die Zufuhrbohrung 32 mit Druckfluid beaufschlagt, wobei der Druckkolben 10 aus seiner Lösestellung wieder in die Spannstellung gelangt und die Spannstange 34 unter der Wirkung des Tellerfederpakets 35 in der Arbeitsspindel zurückgezogen wird. Dabei wird auch ein in der Werkzeugspindel eingesetztes Werkzeug von dem nicht gezeigten Spanngreifer eingezogen.

Die Drehdurchführung 4 ist in die zentrale Durchgangsöffnung 21 eingesetzt. Sie enthält ein stationäres Anschlußteil 36 zum Anschluß einer feststehenden Versorgungsleitung sowie einen drehbaren Verbindungsstutzen 37, der mit einem hohlen Verbindungsteil 38 axial verschiebbar und abgedichtet verbunden ist. Das hohle Verbindungsteil 38 ist in die Durchgangsbohrung der Spannstange 34 eingeschraubt. Von dem Gehäuse der Drehdurchführung 4 führt eine radiale Leckagebohrung 39 nach außen, die mit dem Ringkanal 23 in Verbindung steht. Über diese Leckagebohrung und den Leckagekanal 22 kann das Leckfluid aus dem Inneren der Drehdurchführung 4 nach außen abgeführt werden.

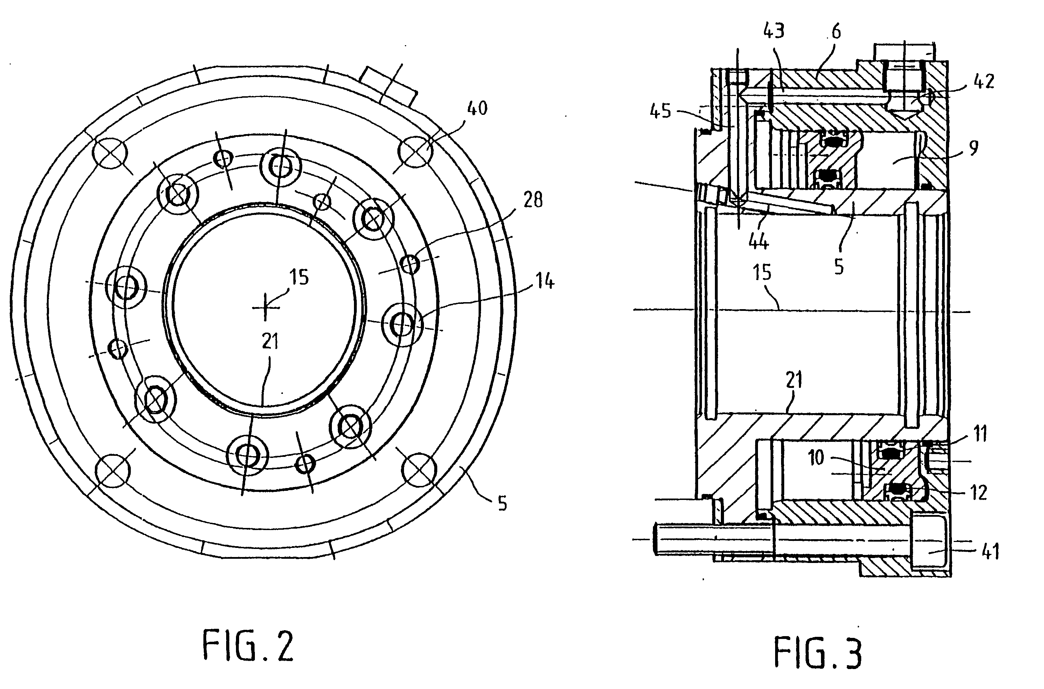

Wie in Figur 2 erkennbar, sind bei der dargestellten Ausführung acht zur Mittelachse 15 des Gehäuses koaxial angeordnete Druckstempel 14 und vier um jeweils 90° zueinander versetzte Leckagekanäle 22 mit jeweils einer stirnseitigen Ablaufbohrung 28 vorgesehen. Die Anzahl der Druckstempel 14 und der Leckagekanäle 22 ist jedoch beliebig veränderbar. An der Außenseite sind vier Durchgangsbohrungen 40 für jeweils eine in Figur 3 gezeigte Schraube 41 vorgesehen, durch die das Gehäuse an einem Spindelkopf oder dgl. befestigt werden kann. In Figur 3 ist außerdem ein Zufuhrkanal für ein Reinigungsfluid dargestellt, der eine im äußeren Gehäuseteil 6 radial angeordnete Zufuhröffnung 42 und eine parallel zur Mittelachse 15 verlaufende Zufuhrbohrung 43 sowie eine mit dieser in Verbindung stehende und über eine schräge Zuleitungsbohrung 44 an der Innenwand der Durchgangsöffnung 21 ausmündende Radialbohrung 45 im inneren Gehäuseteil 5 enthält. Über diesen Zufuhrkanal kann z. B. Reinigungsluft zur Reinigung von Spanflächen oder dgl. zugeführt werden.

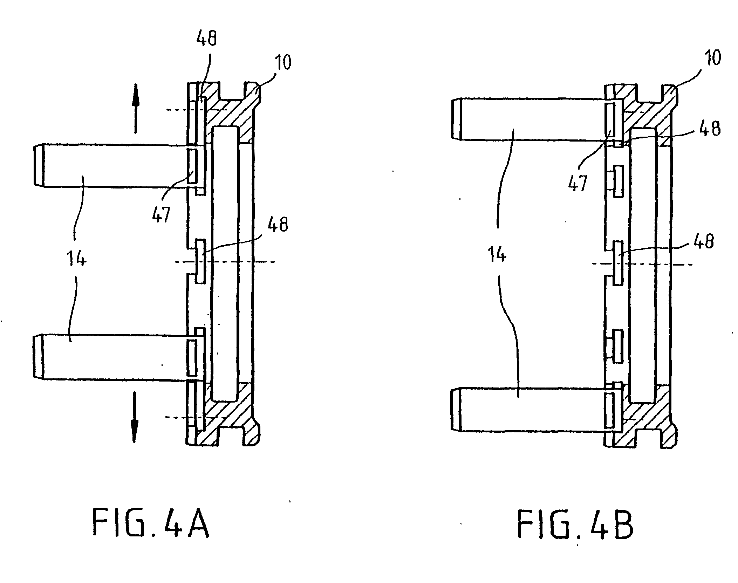

In den Figuren 4A und 4B ist die Montage der Druckstempel 14 an dem Druckkolben 10 gezeigt. Die zylindrischen Druckstempel 14 weisen hierzu an ihrem dem Druckkolben 10 zugewandten Ende zwei einander gegenüberliegende seitliche Abflachungen 47 für den Einschub in entsprechende T-Nuten 48 an der zu den Druckstempeln 14 gerichteten Stirnseite des Druckkolbens 10 auf Die Druckstempel 14 können so durch einfache Verschiebung in Radialrichtung in die entsprechende T-Nut 48 eingesetzt werden, wie dies in Figur 4A gezeigt ist. In der gemäß Figur 4B dargestellten Einbaustellung sind die Druckstempel 14 dann auf einfache Weise in Axialrichtung gegenüber dem Druckkolben 10 fixiert. Auf diese Weise wird mit geringem Fertigungsaufwand eine schnelle und einfache Montage der Druckstempel am Druckkolben erreicht.

Die Erfindung zeichnet sich durch eine sehr kompakte Bauweise aus, die eine platzsparende Konstruktion eines automatisch betätigbaren Werkzeugspanners in einer Werkzeugmaschinenspindel ermöglicht.

Die Erfindung ist allerdings nicht auf das dargestellte Ausführungsbeispiel beschränkt. Sie kann in entsprechender Weise z. B. als Betätigungsvorrichtung für einen Werkstückspanner eingesetzt werden.

## Patentansprüche

1. Betätigungsvorrichtung für einen Werkzeug- oder Werkstückspanner in einer Werkzeugmaschinenspindel (1), mit einem innerhalb eines Gehäuses (5, 6) angeordneten Druckkolben (10) zur Betätigung des Werkzeug- oder Werkstückspanners (2) und mit einer in einer zentralen Durchgangsöffnung (21) des Gehäuses (5, 6) angeordneten Einrichtung (4) für die Zufuhr eines Arbeits- und/oder Reinigungsfluids zur Werkzeugmaschinenspindel (1), **dadurch gekennzeichnet, daß** in einer Seitenwand (17) des Gehäuses (5, 6) mehrere um dessen Mittelachse (15) konzentrisch angeordnete und voneinander beabstandete Durchgangsbohrungen (16) vorgesehen sind, in denen durch den Druckkolben (10) axial verschiebbare Druckstempel (14) aufgenommen sind, daß das Gehäuse (5, 6) mindestens einen Leckagekanal (22) mit einem zwischen den Druckstempeln (14) radial nach außen verlaufenden Abschnitt (25) enthält und daß die Einrichtung (4) eine mit dem Leckagekanal (22) in Verbindung stehende Austrittsöffnung (39) aufweist.

2. Betätigungsvorrichtung nach Anspruch 1, **dadurch gekennzeichnet, daß** das Gehäuse (5, 6) ein inneres Gehäuseteil (5) und ein mit diesem fest verbundenes äußeres Gehäuseteil (6) enthält, durch die ein ringförmiger Druckraum (9) für den Druckkolben (10) begrenzt wird.

3. Betätigungsvorrichtung nach Anspruch 2 , **dadurch gekennzeichnet, daß** das innere Gehäuseteil (5) einen Radialflansch (17) aufweist, der die Seitenwand mit den Durchgangsbohrungen (16) für die Druckstempel (14) bildet.

4. Betätigungsvorrichtung nach Anspruch 2 oder 3, **dadurch gekennzeichnet, daß** der Leckagekanal (22) in dem inneren Gehäuseteil (5) verläuft.

5. Betätigungsvorrichtung nach Anspruch 3 oder 4, **dadurch gekennzeichnet, daß** der radial nach außen verlaufende Abschnitt (25) des Leckagekanals (22) in dem Radialflansch (17) angeordnet ist.

6. Betätigungsvorrichtung nach einem der Ansprüche 2 bis 5, **dadurch gekennzeichnet, daß** der Leckagekanal (22) einen radial innerhalb des Druckraums (9) parallel zur Mittelachse (15) verlaufenden Abeschnitt (26) aufweist.

7. Betätigungsvorrichtung nach einem der Ansprüche 1 bis 6, **dadurch gekennzeichnet, daß** in dem Gehäuse (5, 6) ein Zufuhrkanal (42, 43, 44, 45) für ein Reinigungsfluid angeordnet ist.

8. Betätigungsvorrichtung nach Anspruch 7, **dadurch gekennzeichnet, daß** der Zufuhrkanal (42, 43, 44, 45) eine radial angeordnete Zufuhröffnung (42) und eine parallel zur Mittelachse (15) verlaufende Zufuhrbohrung (43) in einem äußeren Gehäuseteil (6) und eine Radialbohrung (45) mit einer schrägen Zuleitungsbohrung (44) an einem inneren Gehäuseteil (5) enthält.

9. Betätigungsvorrichtung nach einem der Ansprüche 1 bis 8, **dadurch gekennzeichnet, daß** die konzentrisch um die Mittelachse (15) angeordneten Druckstempel (14) gleichwinklig beabstandet sind.

10. Betätigungsvorrichtung nach einem der Ansprüche 1 bis 9, **dadurch gekennzeichnet, daß** das Gehäuse (5, 6) mehrere konzentrisch um die Mittelachse (15) angeordnete und gleichwinklig beabstandete Leckagekanäle (22) enthält.

11. Betätigungsvorrichtung nach einem der Ansprüche 1 bis 10, **dadurch gekennzeichnet, daß** die Druckstempel (14) seitliche Abflachungen (47) zum radialen Einschub in entsprechende T-Nuten (48) an dem Druckkolben (10) aufweisen.

## Claims

1. Actuating device for a tool or workpiece clamping device in a machine tool spindle (1), with a pressure piston (10) which is arranged inside a housing (5, 6) and serves for actuating the tool or workpiece clamping device (2), and with a device (4) which is arranged in a central through opening (21) of the housing (5, 6) and serves for supplying a working and/or cleaning fluid to the machine tool spindle (1), **characterised in that** a plurality of through bores (16) accommodating plungers (14) displaceable axially by the pressure piston (10) are provided in a side wall (17) of the housing (5, 6) and arranged a distance from one another concentrically around its central axis (15), **in that** the housing (5, 6) comprises at least one leakage channel (22) with a portion (25) running radially outwards between the plungers (14), and **in that** the device (4) exhibits an outlet opening (39) communicating with the leakage channel (22).

2. Actuating device according to claim 1, **characterised in that** the housing (5, 6) comprises an inner housing part (5) and an outer housing part (6) connected securely to the latter, which bound an annular pressure chamber (9) for the pressure piston (10).

3. Actuating device according to claim 2, **characterised in that** the inner housing part (5) exhibits a radial flange (17) which forms the side wall with the through bores (16) for the plungers (14).

4. Actuating device according to claim 2 or 3, **characterised in that** the leakage channel (22) runs in the inner housing part (5).

5. Actuating device according to claim 3 or 4, **characterised in that** the portion (25) of the leakage channel (22) running radially outwards is arranged in the radial flange (17).

6. Actuating device according to one of claims 2 to 5, **characterised in that** the leakage channel (22) exhibits a portion (26) running radially inside the pressure chamber (9) parallel to the central axis (15).

7. Actuating device according to one of claims 1 to 6, **characterised in that** a feed channel (42, 43, 44, 45) for a cleaning fluid is arranged in the housing (5, 6).

8. Actuating device according to claim 7, **characterised in that** the feed channel (42, 43, 44, 45) comprises a radially arranged feed opening (42) and a feed bore (43) running parallel to the central axis (15) in an outer housing part (6) and a radial bore (45) with an oblique inlet bore (44) in an inner housing part (5).

9. Actuating device according to one of claims 1 to 8, **characterised in that** the plungers (14) arranged concentrically about the central axis (15) are spaced at equal angles.

10. Actuating device according to one of claims 1 to 9, **characterised in that** the housing (5, 6) comprises a plurality of leakage channels (22) arranged concentrically about the central axis (15) and spaced at equal angles.

11. Actuating device according to one of claims 1 to 10, **characterised in that** the plungers (14) exhibit lateral flats (47) for radial insertion in corresponding T-slots (48) in the pressure piston (10).

## Revendications

1. Dispositif d'actionnement pour système de serrage d'outil ou de pièce dans une broche de machine-outil (1), comprenant un piston de compression (10) disposé à l'intérieur d'un logement (5, 6) destiné à actionner le système de serrage d'outil ou de pièce (2) et comprenant une installation (4) disposée dans une ouverture de passage centrale (21) du logement (5, 6) pour l'amenée d'un fluide moteur et/ou de nettoyage à la broche de machine-outil (1), **caractérisé en ce que** plusieurs alésages de passage (16) disposés de façon concentrique autour de l'axe médian (15) du logement et écartés les uns des autres sont prévus dans une paroi latérale (17) du logement (5, 6), alésages dans lesquels sont reçus des poinçons (14) pouvant être déplacés dans le sens axial par le piston de compression (10), **en ce que** le logement (5, 6) contient au moins un canal de fuite (22) présentant une section (25) s'étendant dans le sens radial vers l'extérieur entre les poinçons (14) et **en ce que** l'installation (4) comprend une ouverture de sortie (39) reliée au canal de fuite (22).

2. Dispositif d'actionnement selon la revendication 1, **caractérisé en ce que** le logement (5, 6) contient une partie interne de logement (5) et une partie externe de logement (6) reliée fixement à celle-ci, parties par lesquelles est délimité un espace de compression annulaire (9) pour le piston de compression (10).

3. Dispositif d'actionnement selon la revendication 2, **caractérisé en ce que** la partie interne de logement (6) comprend une bride radiale (17) qui forme la paroi latérale avec les alésages de passage (16) pour les poinçons (14).

4. Dispositif d'actionnement selon la revendication 2 ou 3, **caractérisé en ce que** le canal de fuite (22) s'étend dans la partie interne de logement (5).

5. Dispositif d'actionnement selon la revendication 3 ou 4, **caractérisé en ce que** la section (25) du canal de fuite (22), s'étendant dans le sens radial vers l'extérieur, est disposée dans la bride radiale (17).

6. Dispositif d'actionnement selon l'une des revendications 2 à 5, **caractérisé en ce que** le canal de fuite (22) comprend une section (26) s'étendant dans le sens radial à l'intérieur de l'espace de compression (9) parallèlement à l'axe médian (15).

7. Dispositif d'actionnement selon l'une des revendications 1 à 6, **caractérisé en ce qu'**un canal d'amenée (42, 43, 44, 45) pour un fluide de nettoyage est disposé dans le logement (5, 6).

8. Dispositif d'actionnement selon la revendication 7, **caractérisé en ce que** le canal d'amenée (42, 43, 44, 45) contient une ouverture d'amenée (42) disposée dans le sens radial et un alésage d'amenée (43) s'étendant parallèlement à l'axe médian (15) dans une partie externe de logement (6) et un alésage radial (45) présentant un alésage d'alimentation (44) en biais sur une partie interne de logement (5).

9. Dispositif d'actionnement selon l'une des revendications 1 à 8, **caractérisé en ce que** les poinçons (14) disposés de façon concentrique autour de l'axe médian (15) sont à même distance angulaire.

10. Dispositif d'actionnement selon l'une des revendications 1 à 9, **caractérisé en ce que** le logement (5, 6) contient plusieurs canaux de fuite (22) disposés de façon concentrique autour de l'axe médian (15) et à même distance angulaire.

11. Dispositif d'actionnement selon l'une des revendications 1 à 10, **caractérisé en ce que** les poinçons (14) comprennent des aplatissements (47) latéraux en vue de l'insertion radiale dans des rainures en T (48) correspondantes sur le piston de compression (10).
